# EUROPÄISCHE PATENTSCHRIFT

(11) **EP 3 211 231 B1**
(45) Veröffentlichungstag und Bekanntmachung des Hinweises auf die Patenterteilung: **06.09.2023**
(21) Anmeldenummer: 17000270.3
(22) Anmeldetag: 21.02.2017
(51) Int. Cl.: F04B 9/125, F04B 15/02, F16N 13/16

(54) **FÖRDERVORRICHTUNG ZUR FÖRDERUNG EINES FLIESSFÄHIGEN MEDIUMS**
DELIVERY DEVICE FOR DELIVERING A FLOWABLE MEDIUM
DISPOSITIF DE TRANSPORT D'UN MILIEU COULANT

(30) Priorität: 25.02.2016 DE 102016002263
(43) Veröffentlichungstag der Anmeldung: 30.08.2017
(73) Patentinhaber: Pressol - Schmiergeräte Gesellschaft mit beschränkter Haftung, 79423 Heitersheim (DE)
(72) Erfinder: SCHLENKER, Rudolf, 6405 Immensee (CH)
(74) Vertreter: Börjes-Pestalozza, Henrich

(56) Entgegenhaltungen:
- DE-C- 961 786
- DE-U1- 8 700 644
- US-A1- 2008 240 944
- US-A1- 2011 189 034

## Beschreibung

Die Erfindung betrifft eine Fördervorrichtung zur Förderung eines fließfähigen Mediums, mit einem Förderantrieb, einer Pumpenvorrichtung und einer Schöpfvorrichtung.

Derartige Fördervorrichtungen sind bereits bekannt. Häufig sind sie zur Förderung eines zähfließenden Mediums, beispielsweise aus einem als Fass ausgestalteten Behälters, eingerichtet. Die Schöpfvorrichtung vorbekannter Fördervorrichtungen weisen in der Regel eine Schöpfkelle auf, in die das zu fördernde Medium hineinfließt, wenn die Schöpfkelle ausgefahren vorliegt. Anschließend ist das Medium mittels einer Hubvorrichtung zur Pumpenvorrichtung beförderbar. Ein Nachteil der vorbekannten Fördervorrichtung liegt beispielsweise darin, dass mit der Schöpfkelle nur dann ein Medium aufnehmbar ist, wenn der Medienpegelstand innerhalb des Behälters höher steht, als der Rand der Schöpfkelle hoch ist. Sinkt der Medienpegel auf oder unter den Rand der Schöpfkelle ab, so ist keine weitere Förderung mittels vorbekannter Fördervorrichtungen mehr möglich.

Die zugrundeliegende Aufgabe dieser Erfindung besteht also darin, die vorgenannten Nachteile einer Fördervorrichtung der eingangs erwähnten Art auszuräumen.

US 2008/0240944 A1 betrifft eine Pumpvorrichtung zur Förderung von Öl oder Fett, mit einem pneumatischen Antrieb mittels welchem ein Pumpenkolben einer Pumpenvorrichtung zwischen einer Einfahrstellung und einer Ausfahrstellung innerhalb einer Pumpenkammer bewegbar ist.

US 2011/0189034 A1 betrifft ebenfalls eine Fördervorrichtung mit einer Pumpenvorrichtung, die eine Pumpenkammer aufweist, in welcher ein Pumpenkolben zwischen einer Einfahrstellung und einer Ausfahrstellung innerhalb der Kammer bewegbar ist.

DE 961 786 C betrifft eine zweistufige Förder- und Druckpumpe als Fasspumpe, mit einem Förderkolben, der in einer Kammer zwischen einer Einfahrstellung und einer Ausfahrstellung mittels eines pneumatischen Antriebs bewegbar ist.

DE 87 00 644 U1 betrifft eine Fasspumpe mit einer Kolbenkammer, in welcher ein Pumpenkolben zwischen einer Einfahr- und einer Ausfahrstellung mittels einer Antriebseinheit bewegbar ist.

Die Lösung dieser Aufgabe erfolgt gemäß der Merkmalskombination nach Anspruch 1. Insbesondere wird erfindungsgemäß zur Lösung dieser Aufgabe eine Fördervorrichtung der eingangs erwähnten Art vorgeschlagen, bei welcher vorgesehen ist, dass der Förderantrieb an einem ersten Ende eines Rohres angeordnet ist, wobei die Pumpenvorrichtung und die Schöpfvorrichtung innerhalb des Rohres angeordnet sind, dass die Schöpfvorrichtung ein Fußventil aufweist, das an einem zweiten Ende des Rohres angeordnet ist, mittels welchem Fußventil ein Einlass für einen Zustrom von Medium in eine Kolbenkammer regelbar ist, dass in der Kolbenkammer ein Kolben angeordnet ist, der die Kolbenkammer in einen Zuströmbereich und einen Abströmbereich unterteilt, wobei der Zuströmbereich und der Abströmbereich über den Kolben verbindbar oder verbunden sind, dass der Kolben über eine Kolbenstange mittels des Förderantriebs zwischen einer Einfahrstellung und einer Ausfahrstellung innerhalb der Kolbenkammer bewegbar ist. Durch die erfindungsgemäße Fördervorrichtung kann somit ein in einem Behälter gelagertes fließfähiges Medium nahezu vollständig aus dem Behälter herausgefördert werden. Im Gegensatz zu vorbekannten Fördervorrichtung ist mittels der erfindungsgemäßen Fördervorrichtung daher auch bei niedrigen Pegelständen des zu fördernden Mediums eine weitere Förderung möglich.

Besonders zweckmäßig kann es dabei sein, wenn die Schöpfvorrichtung der Pumpenvorrichtung in Zuströmrichtung des Mediums vorgeschalten ist. Mittels der Schöpfvorrichtung der erfindungsgemäßen Fördervorrichtung kann daher genügend Medium zur Pumpenvorrichtung transportiert werden, wobei mittels der Pumpenvorrichtung ein ausreichend hoher Druck zur Weiterförderung des Mediums erzeugbar ist.

Erfindungsgemäß ist vorsehen, dass der Kolben der Schöpfvorrichtung und ein Pumpenkolben der Pumpenvorrichtung über die Kolbenstange durch den Förderantrieb bewegbar sind. Dadurch ist ein relativ einfacher synchroner Betrieb der Schöpfvorrichtung und der Pumpenvorrichtung mittels des Förderantriebs möglich.

Gemäß einer besonders vorteilhaften Ausgestaltung der erfindungsgemäßen Fördervorrichtung kann der Kolben ein Kolbenventil aufweisen, über welches Kolbenventil der Zuströmbereich und der Abströmbereich der Kolbenkammer verbindbar oder verbunden sind. Dabei kann es besonders zweckmäßig sein, wenn das Kolbenventil als Rückschlagventil ausgebildet ist. Vorzugsweise kann das Kolbenventil als Kugelrückschlagventil ausgestaltet sein. Besonders zweckmäßig kann es dabei sein, wenn eine Kugel mittels eines Rückstellelements, wie beispielsweise einer Feder, in einer Verschlussstellung gehalten ist, wobei durch eine Druckausübung auf die Kugel die Kugel entgegen einer Rückstellkraft des Rückstellelements in eine Offenstellung bewegbar ist. Dadurch kann mittels des Kolbenventils also eine Durchflussrichtung von dem Zuströmbereich in den Abströmbereich der Kolbenkammer festgelegt sein, insbesondere wobei ein Rückfluss entgegen der festgelegten Durchflussrichtung nicht möglich ist oder nur ein geringeres Volumen entgegen der festgelegten Durchflussrichtung zurückfließen kann.

Weiter kann es zweckmäßig sein, wenn das Fußventil als Rückschlagventil ausgestaltet ist, wodurch eine Durchflussrichtung in den Zuströmbereich der Kolbenkammer festgelegt ist. Durch das als Rückschlagventil ausgestaltete Fußventil kann somit ein ungewollter Rückfluss von in die Kolbenkammer aufgenommenen Medium beispielsweise in ein Behältnis, in welchem das Medium gelagert ist, verhindert werden.

Eine besonders effiziente Förderung des Mediums mittels der erfindungsgemäßen Vorrichtung kann dadurch erreichbar sein, wenn diese derart eingerichtet ist, dass bei der Bewegung des Kolbens von der Ausfahrstellung zu der Einfahrstellung das Fußventil geöffnet ist oder wird und neues Medium durch das Fußventil in den Zuströmbereich eingesaugt wird und Medium aus dem Abströmbereich in die Pumpenvorrichtung gedrückt wird. Alternativ oder ergänzend dazu kann es zweckmäßig sein, wenn bei einer Bewegung des Kolbens von der Einfahrstellung zu der Ausfahrstellung das Fußventil geschlossen ist oder wird und Medium aus dem Zuströmbereich in den Abströmbereich gedrückt wird.

Eine besonders günstige Ausgestaltung der erfindungsgemäßen Fördervorrichtung kann dadurch erreicht werden, dass der Förderantrieb als oszillierender Antrieb, insbesondere als Pneumatikmotor, ausgestaltet ist.

Um eine verbesserte Gesamtförderleistung pro Zeiteinheit der erfindungsgemäßen Fördervorrichtung erreichen zu können, kann es zweckmäßig sein, wenn eine Förderleistung der Schöpfvorrichtung größer als eine Förderleistung der Pumpenvorrichtung ist. Dies kann zum Beispiel dadurch eingerichtet werden, dass ein Fassungsvermögen der Kolbenkammer der Schöpfvorrichtung größer ist als ein Fassungsvermögen der Pumpenkammer der Pumpenvorrichtung.

Um eine Überlastung durch die Entstehung eines zu hohen Innendrucks innerhalb der Kolbenkammer, insbesondere innerhalb des Abströmbereichs der Kolbenkammer, und/oder innerhalb der Pumpenkammer vermeiden zu können kann es zweckmäßig sein, wenn die Fördervorrichtung dazu eingerichtet ist, das Medium vom Abströmbereich in den Zuströmbereich zurückfließen kann. Insbesondere kann hierbei vorgesehen sein, dass ein teilweises Zurückfließen von Medium bei einer Bewegung des Kolbens von der Ausfahrstellung zu der Einfahrstellung möglich ist. Ein solches teilweises Zurückfließen von Medium kann beispielsweise dadurch erreicht werden, dass zwischen dem Kolben und einer Innenwand der Kolbenkammer ein freier Spalt vorliegt und/oder zumindest eine Entlastungsöffnung am Kolben vorliegt. Besonders vorteilhaft kann es sein, wenn zumindest eine Entlastungsöffnung am Kolbenventil angeordnet ist. Eine Entlastungsöffnung kann beispielsweise als eine Kerbe und/oder eine Nut ausgebildet sein, welche beispielsweise in Verschlussstellung des Kolbenventils nicht oder nicht vollständig abdichtbar ist.

Es kann zweckmäßig sein, wenn der Einlass als eine axiale und/oder als eine radiale Öffnung des Rohres ausgestaltet ist. Beispielsweise kann der Einlass als eine axiale und/oder eine radiale Bohrung des Rohres ausgestaltet sein.

Um ein Festsaugen des zweiten Endes des Rohres an einem Behälterboden vermeiden zu können, kann es erfindungsgemäß vorgesehen sein, dass am zweiten Ende des Rohres zumindest ein Abstandshalter ausgestaltet ist. Der zumindest eine Abstandshalter kann beispielsweise als Stützfuß ausgebildet sein. Alternativ oder ergänzend dazu kann es zweckmäßig sein, wenn am zweiten Ende des Rohres radial verlaufende Öffnungen, insbesondere Kanäle und/oder Bohrungen, vorgesehen sind. Damit kann ebenfalls ein Ansaugen des zweiten Endes des Rohres an einem Behälterboden vermieden werden, da nachströmendes Medium nicht von unten, sondern seitlich über die radialen Öffnungen in die Kolbenkammer einsaugbar ist.

Es kann weiter zweckmäßig sein, wenn eine Regelung des Fußventils zumindest teilweise durch eine Zwangssteuerung des Fußventils durch den Kolben erfolgt. Besonders zweckmäßig kann es dabei sein, wenn das Fußventil einen Ventilkörper mit einer relativ zur Längsachse des Rohres schräg angeordneten Fläche aufweist, welche durch den Kolben oder einen Verdrängungskörper des Kolbens derart beaufschlagbar ist, dass der Ventilkörper entgegen einer Rückstellkraft verdrängbar ist, wenn der Kolben von der Einfahrstellung in die Ausfahrstellung bewegt wird. Die Rückstellkraft kann beispielsweise mittels eines Rückstellmittels erzeugbar sein. Der Ventilkörper des Fußventils kann hierbei beispielsweise als ein Keil ausgestaltet sein.

Es kann weiter erfindungsgemäß vorgesehen sein, dass der Kolben durch die Kolbenstange zwangsgesteuert ist oder nicht. Ist der Kolben nicht durch die Kolbenstange zwangsgesteuert, so kann ein Pumpenvorgang mittels der Pumpenvorrichtung vorgenommen werden, unabhängig davon, ob bereits Medium aus dem Behälter in den Zuströmbereich der Kolbenkammer eingesaugt ist. Dies kann vor allem bei besonders zähfließenden Medien vorteilhaft sein. Alternativ oder ergänzend dazu kann es zweckmäßig sein, wenn der Kolben mittels eines Rückstellelements, insbesondere mittels einer Zug- und/oder Druckfeder von der Ausfahrstellung in die Einfahrstellung oder umgekehrt bewegbar ist. Mittels eines solchen Rückstellelements kann daher eine Entlastung des Förderantriebs erreicht werden, wodurch beispielsweise seine Lebensdauer verlängerbar ist. Also kann der Kolben unabhängig vom Förderantrieb aus der Ausfahrstellung in die Einfahrstellung bewegbar sein und/oder von der Einfahrstellung in die Ausfahrstellung über die Kolbenstange mittels des Förderantriebs bewegbar sein.

Zur Lösung der Aufgabe wird gemäß dem zweiten unabhängigen Anspruch auch eine Fördervorrichtung zur Förderung eines fließfähigen Mediums mit einem Förderantrieb, einer Pumpenvorrichtung und einer Schöpfvorrichtung vorgeschlagen, wobei der Förderantrieb an einem ersten Ende (6) eines Rohres (5) angeordnet ist. Erfindungsgemäß ist bei der Fördervorrichtung nach Anspruch 2 vorgesehen, dass die Pumpenvorrichtung und die Schöpfvorrichtung innerhalb des Rohres angeordnet sind, dass die Schöpfvorrichtung ein Fußventil aufweist, das an einem zweiten Ende des Rohres angeordnet ist, mittels welchem Fußventil ein Einlass für einen Zustrom von Medium in eine Kolbenkammer regelbar ist, dass in der Kolbenkammer der Schöpfvorrichtung ein Kolben angeordnet ist, der die Kolbenkammer in einen Zuströmbereich und einen Abströmbereich unterteilt, wobei der Zuströmbereich und der Abströmbereich über den Kolben verbindbar oder verbunden sind, dass der Kolben über eine Kolbenstange mittels des Förderantriebs zwischen einer Einfahrstellung und einer Ausfahrstellung innerhalb der Kolbenkammer bewegbar ist, dass die Pumpenvorrichtung eine Pumpenkammer aufweist, in welcher ein Pumpenkolben angeordnet ist, der mittels des Förderantriebs zwischen einer Ausfahrstellung und einer Einfahrstellung innerhalb der Pumpenkammer bewegbar ist, und dass die Pumpenkammer ein Einlassventil und ein Auslassventil aufweist. Insbesondere kann dabei vorgesehen sein, dass ein in der Pumpenkammer enthaltenes Medium durch den Pumpenkolben bei einer Bewegung des Pumpenkolbens von einer oder der bereits genannten Einfahrstellung zu einer oder der bereits genannten Ausfahrstellung über einen Förderkanal durch das Auslassventil in eine Förderleitung verdrängbar ist.

Gemäß einer besonders vorteilhaften Ausgestaltung der Erfindung kann es erfindungsgemäß vorgesehen sein, dass der Förderkanal innerhalb des Pumpenkolbens angeordnet ist. Beispielsweise kann der Förderkanal als eine axiale Bohrung oder als ein axialer Kanal innerhalb des Pumpenkolbens ausgestaltet sein. Gemäß einer weiteren vorteilhaften Ausgestaltung der erfindungsgemäßen Fördervorrichtung kann das Ein- und/oder das Auslassventil als Rückschlagventil ausgestaltet sein. Dadurch kann ein Zurückfließen von Medium aus der Pumpenkammer in die Kolbenkammer oder von der Förderleitung in die Pumpenkammer und/oder den Förderkanal verhindert werden. Bei der erfindungsgemäßen Fördervorrichtung kann ferner vorgesehen sein, dass bei einer Bewegung des Kolbens von der Ausfahrstellung zur Einfahrstellung ein Medium aus dem Abströmbereich der Kolbenkammer in die Pumpenkammer gedrückt wird.

Eine besonders stabile Ausgestaltung der erfindungsgemäßen Fördervorrichtung kann vorsehen, dass ein oder der bereits zuvor genannte Pumpenkolben als ein Teil der Kolbenstange ausgebildet oder fest mit der Kolbenstange verbunden ist. Ist der Pumpenkolben als Teil der Kolbenstange ausgebildet, kann es zweckmäßig sein, wenn ein Durchmesser des Querschnitts der Kolbenstange in einem Pumpenkolbenabschnitt breiter als in einem Verbindungsabschnitt zwischen dem Pumpenkolben und dem Kolben ist.

Aufgrund der zuvor genannten Vorteile der erfindungsgemäßen Vorrichtung eignet sich diese besonders dazu, als Fasspumpe ausgestaltet zu sein. Insbesondere kann es dabei vorteilhaft sein, wenn der Förderantrieb der Fördervorrichtung außerhalb und/oder das Rohr innerhalb eines Fasses anordenbar ist/sind.

Ferner betrifft die Erfindung auch die Verwendung der erfindungsgemäßen Fördervorrichtung, wie hierin beschrieben und beansprucht, zur Förderung eines viskosen Mediums, wie beispielsweise eines Fetts. Besonders die beschriebene rohrförmige Ausgestaltung von Pumpenvorrichtung und Schöpfvorrichtung ermöglicht eine Förderung aus einem Fass, insbesondere durch ein Spundloch.

Die Erfindung wird nun anhand eines Ausführungsbeispiels näher beschrieben, ist jedoch nicht auf dieses Ausführungsbeispiel beschränkt. Weitere erfindungsgemäße Ausführungsbeispiele ergeben sich durch die Kombination einzelner oder mehrerer Merkmale der Schutzansprüche untereinander und/oder mit einzelnen oder mehreren Merkmalen der Ausführungsbeispiele.

Es zeigt:
- Fig. 1: einen Teilbereich der erfindungsgemäßen Fördervorrichtung mit Pumpenvorrichtung und Schöpfvorrichtung in Schnittdarstellung,
- Fig. 2: einen Querschnitt durch das Rohr der erfindungsgemäßen Fördervorrichtung,
- Fig. 3: eine Schnittansicht einer Ausgestaltung einer erfindungsgemäßen Fördervorrichtung, wobei der Kolben in Ausfahrstellung vorliegt,
- Fig. 4: eine Schnittdarstellung der erfindungsgemäßen Fördervorrichtung aus Figur 3, wobei der Kolben während einer Bewegung von einer Ausfahrstellung zu einer Einfahrstellung gezeigt ist,
- Fig. 5: eine Schnittansicht der Ausgestaltung der erfindungsgemäßen Fördervorrichtung aus Figur 3 und Figur 4, wobei sich der Kolben in einer Einfahrstellung befindet,
- Fig. 6: eine Schnittansicht einer Ausgestaltung der erfindungsgemäßen Fördervorrichtung gemäß Figur 3 bis Figur 5, wobei der Kolben während einer Bewegung von der Einfahrstellung zur Ausfahrstellung gezeigt ist.

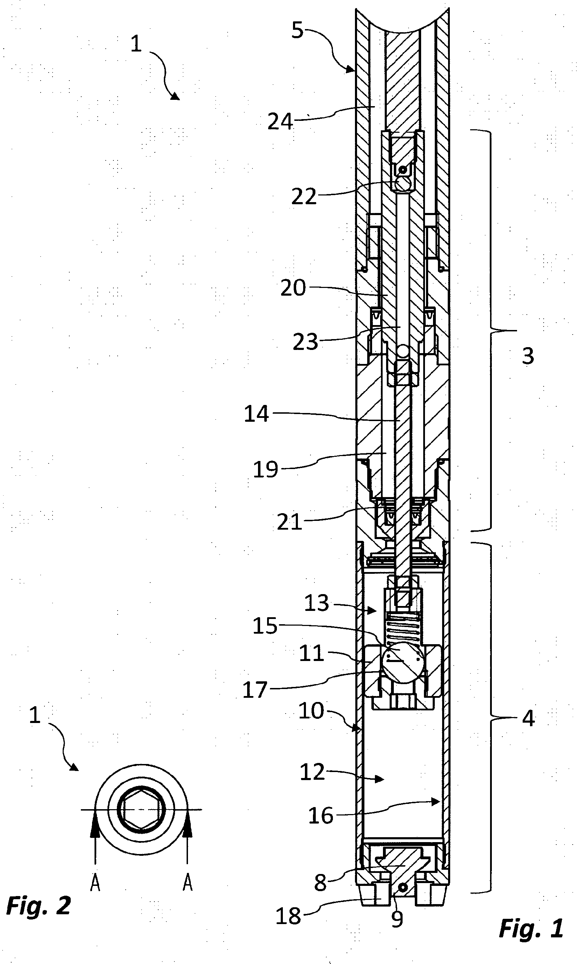

In den Figuren 1 bis 6 ist ein spezifisches Ausführungsbeispiel einer erfindungsgemäßen Fördervorrichtung zur Förderung eines fließfähigen Mediums, insbesondere eines zähfließenden Mediums, wie beispielsweise einem Fett, dargestellt, wobei die erfindungsgemäße Fördervorrichtung im Ganzen als 1 bezeichnet ist.

Die erfindungsgemäße Fördervorrichtung 1 hat einen Förderantrieb 2, der an einem ersten Ende 6 eines Rohres 5 angeordnet: ist. Die Fördervorrichtung 1 ist daher derart ausgestaltet, dass während des Betriebs der Fördervorrichtung 1 der Förderantrieb 2 außerhalb eines Behälters, wie beispielsweise eines Fasses, und das Rohr 5 innerhalb des Behälters, insbesondere des Fasses, angeordnet ist. Das Rohr 5 kann dabei beispielsweise in eine Öffnung des Behälters, wie beispielsweise in ein Spundloch, einführbar sein.

Weiter weist die erfindungsgemäße Fördervorrichtung 1 eine Pumpenvorrichtung 3 und eine Schöpfvorrichtung 4 auf. Die Pumpenvorrichtung 3 und die Schöpfvorrichtung 4 sind innerhalb des Rohres 5 angeordnet.

Die Schöpfvorrichtung 4 hat ein Fußventil 8, mittels welchem ein Einlass 9 für einen Zustrom von Medium in eine Kolbenkammer 10 der Schöpfvorrichtung 4 regelbar ist. Das Fußventil 8 ist an einem zweiten Ende 7 des Rohres 5 angeordnet.

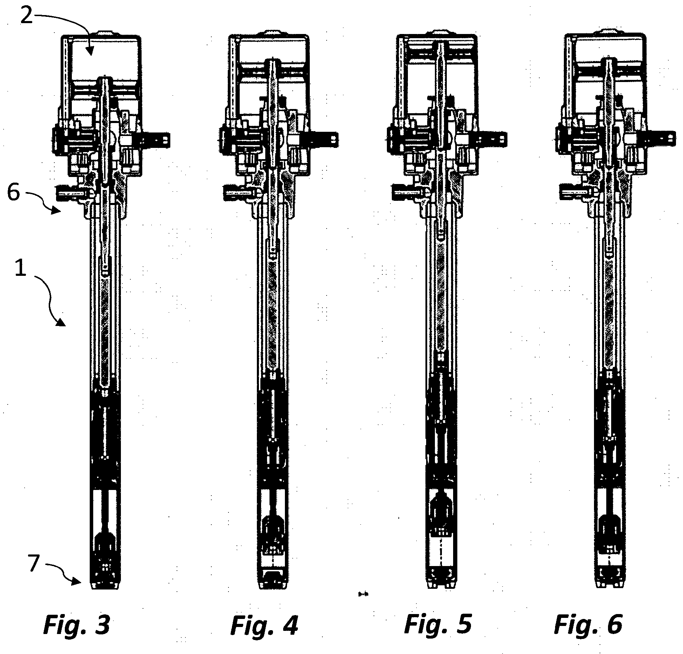

In der Kolbenkammer 10 ist ein beweglich geführter Kolben 11 angeordnet, welcher die Kolbenkammer 10 in einem Zuströmbereich 12 und einem Abströmbereich 13 unterteilt. Über den Kolben 11 ist der Zuströmbereich 12 und der Abströmbereich 13 über ein Kolbenventil 15 verbindbar. Der Kolben 11 ist derart innerhalb der Kolbenkammer 10 bewegbar angeordnet, dass er zwischen einer Ausfahrstellung (siehe Figur 3) und einer Einfahrstellung (siehe Figur 5) bewegbar ist.

Die Schöpfvorrichtung 4 ist der Pumpenvorrichtung 3 in Zuströmrichtung des Mediums vorgeschalten. Sowohl der Kolben 11 der Schöpfvorrichtung 4 als auch ein Pumpenkolben 20 der Pumpenvorrichtung 3 sind über eine Kolbenstange 14 durch den Förderantrieb 2 bewegbar.

Das Kolbenventil 15 des Kolbens 11 ist als ein Rückschlagventil, insbesondere als ein Kugelrückschlagventil, ausgestaltet. Dadurch ist eine Durchflussrichtung vom Zuströmbereich 12 in den Abströmbereich 13 der Kolbenkammer 10 festgelegt.

Das Fußventil 8 der Schöpfvorrichtung 4 ist ebenfalls als ein Rückschlagventil ausgestaltet, wodurch eine Durchflussrichtung des Mediums aus einem Behälter in den Zuströmbereich 12 der Kolbenkammer 10 festgelegt ist.

In den Figuren 3 bis 6 ist der Bewegungsablauf des Kolbens 11 und des Pumpenkolbens 20 während eines Förderzykluses dargestellt. In Figur 3 ist gezeigt, wie der Kolben 11 und der Pumpenkolben 20 in Ausfahrstellung vorliegen. Wird mittels des Förderantriebes 2 der Kolben 11 und der Pumpenkolben 20, wie in Figur 4 gezeigt ist, aus der Ausfahrstellung in Richtung der Einfahrstellung bewegt, so öffnet sich das Fußventil 8 aufgrund des entstehenden Unterdrucks im Zuströmbereich 12 der Kolbenkammer 10. Neues Medium kann dadurch durch den Einlass 9 über das Fußventil 8 in den Zuströmbereich 12 eingesaugt werden. Des Weiteren wird Medium aus dem Abströmbereich 13 in die Pumpenkammer 19 der Pumpenvorrichtung 3 durch ein Einlassventil 21 der Pumpenkammer 19 gedrückt. In Figur 5 ist dargestellt, wie der Kolben 11 und der Pumpenkolben 20 in Einfahrstellung vorliegen. Bei einer umgekehrten Bewegung des Kolbens 11 und des Pumpenkolbens 20 von der Einfahrstellung zur Ausfahrstellung wird das Fußventil 8 und das Einlassventil 21 der Pumpenkammer 19 geschlossen und Medium aus dem Zuströmbereich 12 in den Abströmbereich 13 der Kolbenkammer 10 gedrückt. Ferner wird mittels des Pumpenkolbens 20 Medium aus der Pumpenkammer 19 in einen axial verlaufenden Förderkanal 23 im Inneren des Pumpenkolbens 20 verdrängt und über den Förderkanal 23 durch ein Auslassventil 22 der Pumpenkammer 19 in eine Förderleitung 24 gedrückt (vgl. Figur 6) .

Der Förderantrieb 2 ist als ein oszillierender Antrieb, wie beispielsweise in den Figuren 3 bis 6 dargestellt, als Pneumatikmotor, ausgestaltet.

Eine Förderleistung der Schöpfvorrichtung 4 ist größer als eine Förderleistung der Pumpenvorrichtung 3 eingerichtet. Um zu vermeiden, dass sich im Inneren der Fördervorrichtung 1, insbesondere innerhalb der Kolbenkammer 10 und/oder der Pumpenkammer 19 ein Überdruck entsteht, durch welchen die Fördervorrichtung 1 beschädigt werden könnte, ist die Fördervorrichtung 1 derart eingerichtet, dass Medium vom Abströmbereich 13 in den Zuströmbereich 12 zurückfließen kann, beispielsweise bei einer Bewegung des Kolbens 11 von der Ausfahrstellung zu der Einfahrstellung. Insbesondere kann das teilweise Zurückfließen des Mediums dadurch erreicht werden, dass Medium durch einen Spalt zwischen dem Kolben 11 und einer Innenwand 16 der Kolbenkammer 10 und/oder über zumindest eine Entlastungsöffnung 17 am Kolben 11 fließen kann. Die Entlastungsöffnung 17 kann beispielsweise am Kolbenventil 15 ausgestaltet sein, wobei dadurch beispielsweise ein vollständiges Verschließen einer Durchflussöffnung mittels des Kolbenventils 15 im Kolben 11 verhindert werden kann, sodass auch in einer Verschlussstellung des Kolbenventils 15 Medium über die Entlastungsöffnung 17 zurückfließen kann. Die Entlastungsöffnung 17 kann beispielsweise als eine Nut ausgestaltet sein.

Der Einlass 9 ist als eine axiale Öffnung des Rohres 5 ausgebildet. Am zweiten Ende 7 des Rohres 5 sind mehrere Abstandshalter 18 ausgestaltet, wodurch ein Festsaugen des Rohres 5 an einem Behälterboden vermeidbar ist.

Die Pumpenvorrichtung 3 weist eine Pumpenkammer 19 auf, in welcher der Pumpenkolben 20 angeordnet ist. Der Pumpenkolben 20 ist dabei als einen Teil der Kolbenstange 14 ausgebildet, welche mit dem Förderantrieb 2 verbunden ist. Ein Durchmesser eines Querschnitts der Kolbenstange 14 ist in einem Pumpenkolbenabschnitt daher größer als in einem Verbindungsabschnitt zwischen dem Pumpenkolben 20 und dem Kolben 11. Dadurch ist zudem die Pumpenkammer 19 ausgebildet, innerhalb welcher der Pumpenkolben 20 derart bewegbar ist, dass dadurch Medium, das innerhalb der Pumpenkammer 19 vorliegt, in den Förderkanal 23 gedrückt werden kann, wenn eine Bewegung des Pumpenkolbens 20 von der Einfahrstellung zur Ausfahrstellung vorgenommen wird.

Die erfindungsgemäße Fördervorrichtung 1 kann als eine Fasspumpe ausgestaltet sein und eignet sich daher insbesondere zu einer Verwendung zur Förderung eines pastösen Mediums, wie beispielsweise Fett.

### Bezugszeichenliste

- 1: Fördervorrichtung
- 2: Förderantrieb
- 3: Pumpenvorrichtung
- 4: Schöpfvorrichtung
- 5: Rohr
- 6: erstes Ende des Rohres
- 7: zweites Ende des Rohres
- 8: Fußventil
- 9: Einlass
- 10: Kolbenkammer
- 11: Kolben
- 12: Zuströmbereich
- 13: Abströmbereich
- 14: Kolbenstange
- 15: Kolbenventil
- 16: Innenwand der Kolbenkammer
- 17: Entlastungsöffnung
- 18: Abstandshalter
- 19: Pumpenkammer
- 20: Pumpenkolben
- 21: Einlassventil der Pumpenkammer
- 22: Auslassventil der Pumpenkammer
- 23: Förderkanal
- 24: Förderleitung

## Patentansprüche

1. Fördervorrichtung (1) zur Förderung eines fließfähigen Mediums, mit einem Förderantrieb (2), einer Pumpenvorrichtung (3) und einer Schöpfvorrichtung (4), wobei der Förderantrieb (2) an einem ersten Ende (6) eines Rohres (5) angeordnet ist, **dadurch gekennzeichnet, dass** die Pumpenvorrichtung (3) und die Schöpfvorrichtung (4) innerhalb des Rohres (5) angeordnet sind, dass die Schöpfvorrichtung (4) ein Fußventil (8) aufweist, das an einem zweiten Ende (7) des Rohres (5) angeordnet ist, mittels welchem Fußventil (8) ein Einlass (9) für einen Zustrom von Medium in eine Kolbenkammer (10) regelbar ist, dass in der Kolbenkammer (10) der Schöpfvorrichtung (4) ein Kolben (11) angeordnet ist, der die Kolbenkammer (10) in einen Zuströmbereich (12) und einen Abströmbereich (13) unterteilt, wobei der Zuströmbereich (12) und der Abströmbereich (13) über den Kolben (11) verbindbar oder verbunden sind, dass der Kolben (11) über eine Kolbenstange (14) mittels des Förderantriebs (2) zwischen einer Einfahrstellung und einer Ausfahrstellung innerhalb der Kolbenkammer (10) bewegbar ist, dass die Pumpenvorrichtung (3) einen Pumpenkolben (20) aufweist, und dass der Kolben (11) der Schöpfvorrichtung (4) und der Pumpenkolben (20) der Pumpenvorrichtung (3) über die Kolbenstange (14) durch den Förderantrieb (2) bewegbar sind.

2. Fördervorrichtung (1) zur Förderung eines fließfähigen Mediums, insbesondere nach Anspruch 1, mit einem Förderantrieb (2), einer Pumpenvorrichtung (3) und einer Schöpfvorrichtung (4), wobei der Förderantrieb (2) an einem ersten Ende (6) eines Rohres (5) angeordnet ist, **dadurch gekennzeichnet, dass** die Pumpenvorrichtung (3) und die Schöpfvorrichtung (4) innerhalb des Rohres (5) angeordnet sind, dass die Schöpfvorrichtung (4) ein Fußventil (8) aufweist, das an einem zweiten Ende (7) des Rohres (5) angeordnet ist, mittels welchem Fußventil (8) ein Einlass (9) für einen Zustrom von Medium in eine Kolbenkammer (10) regelbar ist, dass in der Kolbenkammer (10) der Schöpfvorrichtung (4) ein Kolben (11) angeordnet ist, der die Kolbenkammer (10) in einen Zuströmbereich (12) und einen Abströmbereich (13) unterteilt, wobei der Zuströmbereich (12) und der Abströmbereich (13) über den Kolben (11) verbindbar oder verbunden sind, dass der Kolben (11) über eine Kolbenstange (14) mittels des Förderantriebs (2) zwischen einer Einfahrstellung und einer Ausfahrstellung innerhalb der Kolbenkammer (10) bewegbar ist, dass die Pumpenvorrichtung (3) eine Pumpenkammer (19) aufweist, in welcher ein Pumpenkolben (20) angeordnet ist, der mittels des Förderantriebs (2) zwischen einer Ausfahrstellung und einer Einfahrstellung innerhalb der Pumpenkammer (19) bewegbar ist, und dass die Pumpenkammer (19) ein Einlassventil (21) und ein Auslassventil (22) aufweist.

3. Fördervorrichtung (1) nach Anspruch 1 oder 2, **dadurch gekennzeichnet, dass** die Schöpfvorrichtung (4) der Pumpenvorrichtung (3) in Zuströmrichtung des Mediums vorgeschalten ist.

4. Fördervorrichtung (1) nach einem der vorstehenden Ansprüche, **dadurch gekennzeichnet, dass** der Kolben (11) ein Kolbenventil (15) aufweist, über welches der Zuströmbereich (12) und der Abströmbereich (13) der Kolbenkammer (10) verbindbar oder verbunden sind, insbesondere wobei das Kolbenventil (15) als Rückschlagventil, vorzugsweise als Kugelrückschlagventil, ausgestaltet ist, wodurch eine Durchflussrichtung von dem Zuströmbereich (12) in den Abströmbereich (13) der Kolbenkammer (10) festgelegt ist, und/oder dass das Fußventil (8) als Rückschlagventil ausgestaltet ist, wodurch eine Durchflussrichtung in den Zuströmbereich (12) der Kolbenkammer (10) festgelegt ist.

5. Fördervorrichtung (1) nach einem der vorstehenden Ansprüche, **dadurch gekennzeichnet, dass** die Fördervorrichtung (1) derart eingerichtet ist, dass bei einer Bewegung des Kolbens (11) von der Ausfahrstellung zu der Einfahrstellung das Fußventil (8) geöffnet ist oder wird und neues Medium durch das Fußventil (8) in den Zuströmbereich (12) eingesaugt wird und Medium aus dem Abströmbereich (13) in die Pumpenvorrichtung (3) gedrückt wird und/oder dass bei einer Bewegung des Kolbens (11) von der Einfahrstellung zu der Ausfahrstellung das Fußventil (8) geschlossen ist oder wird und Medium aus dem Zuströmbereich(12) in den Abströmbereich (13) gedrückt wird.

6. Fördervorrichtung (1) nach einem der vorstehenden Ansprüche, **dadurch gekennzeichnet, dass** der Förderantrieb (2) als oszillierender Antrieb, insbesondere als Pneumatikmotor, ausgestaltet ist und/oder dass eine Förderleistung der Schöpfvorrichtung (4) größer als eine Förderleistung der Pumpenvorrichtung (3) ist.

7. Fördervorrichtung (1) nach einem der vorstehenden Ansprüche, **dadurch gekennzeichnet, dass** die Fördervorrichtung (1) dazu eingerichtet ist, dass Medium, insbesondere bei einer Bewegung des Kolbens (11) von der Ausfahrstellung zu der Einfahrstellung, vom Abströmbereich (13) in den Zuströmbereich (12) zurückfließen kann, insbesondere indem Medium zwischen dem Kolben (11) und einer Innenwand (16) der Kolbenkammer (10) und/oder über zumindest eine Entlastungsöffnung (17) am Kolben (11), vorzugsweise über zumindest eine Entlastungsöffnung (17) am Kolbenventil (15), zurückfließen kann.

8. Fördervorrichtung (1) nach einem der vorstehenden Ansprüche, **dadurch gekennzeichnet, dass** der Einlass (9) als eine axiale und/oder eine radiale Öffnung des Rohres (5), insbesondere als eine axiale und/oder eine radiale Bohrung des Rohres (5), ausgestaltet ist und/oder dass am zweiten Ende (7) des Rohres (5) zumindest ein Abstandshalter (18) ausgestaltet ist.

9. Fördervorrichtung (1) nach einem der vorstehenden Ansprüche, **dadurch gekennzeichnet, dass** eine Regelung des Fußventils (8) zumindest teilweise durch eine Zwangssteuerung des Fußventils (8) durch den Kolben (11) erfolgt, insbesondere wobei das Fußventil (8) einen Ventilkörper mit einer relativ zur Längsachse des Rohres (5) schräg angeordnete Fläche aufweist, welche durch den Kolben (11) oder einen Verdrängungskörper des Kolbens (11) derart beaufschlagbar ist, dass der Ventilkörper entgegen einer Rückstellkraft, insbesondere welche durch ein Rückstellmittel erzeugbar ist, verdrängbar ist, wenn der Kolben (11) von der Einfahrstellung in die Ausfahrstellung bewegt wird.

10. Fördervorrichtung (1) nach einem der vorstehenden Ansprüche, **dadurch gekennzeichnet, dass** der Kolben (11) durch die Kolbenstange (14) zwangsgesteuert ist oder nicht und/oder dass der Kolben (11) mittels eines Rückstellelements, insbesondere mittels einer Zug- und/oder Druckfeder, von der Ausfahrstellung in die Einfahrstellung oder umgekehrt bewegbar ist.

11. Fördervorrichtung (1) nach einem der vorstehenden Ansprüche, **dadurch gekennzeichnet, dass** ein in der Pumpenkammer (19) enthaltenes Medium durch den Pumpenkolben (20) bei einer Bewegung des Pumpenkolbens (20) von einer oder der Einfahrstellung zu einer oder der Ausfahrstellung über einen Förderkanal (23), insbesondere einen Förderkanal (23) innerhalb des Pumpenkolbens (20), durch das Auslassventil (22) in eine Förderleitung (24) verdrängbar ist.

12. Fördervorrichtung (1) nach einem der vorstehenden Ansprüche, **dadurch gekennzeichnet, dass** ein oder der Pumpenkolben (20) als ein Teil der Kolbenstange (14) ausgebildet oder fest damit verbunden ist, vorzugsweise wobei ein Durchmesser eines Querschnitts der Kolbenstange (14) in einem Pumpenkolbenabschnitt breiter als in einem Verbindungsabschnitt zwischen dem Pumpenkolben (20) und dem Kolben (11) ist.

13. Fördervorrichtung (1) nach einem der vorstehenden Ansprüche, **dadurch gekennzeichnet, dass** die Fördervorrichtung (1) als Fasspumpe ausgestaltet ist, insbesondere wobei der Förderantrieb (2) der Fördervorrichtung (1) außerhalb und/oder das Rohr (5) innerhalb eines Fasses anordenbar ist/sind.

14. Verwendung der Fördervorrichtung (1) nach einem der Ansprüche 1 bis 13 zur Förderung eines viskosen Mediums, insbesondere von Fett, insbesondere aus einem Fass.

## Claims

1. Delivery device (1) for delivering a flowable medium, having a delivery drive (2), a pump device (3), and a scoop device (4), wherein the delivery drive (2) is arranged on first end (6) of a pipe (5), **characterized in that** the pump device (3) and the scoop device (4) are arranged within the pipe (5); **in that** the scoop device (4) has a foot valve (8) which is arranged on a second end (7) of the pipe (5), by means of which foot valve (8) an inlet (9) for an inflow of medium into a piston chamber (10) is able to be feedback-controlled; **in that** a piston (11) which sub-divides the piston chamber (10) into an inflow region (12) and an outflow region (13) is arranged in the piston chamber (10) of the scoop device (4), wherein the inflow region (12) and the outflow region (13) are able to be connected or are connected by way of the piston (11); **in that** the piston (11) by way of a piston rod (14) is movable between a retracted position and an extended position within the piston chamber (10) by means of the delivery drive (2); **in that** the pump device (3) has a pump piston (20); and **in that** the piston (11) of the scoop device (4) and the pump piston (20) of the pump device (3) are movable by the delivery drive (2) by way of the piston rod (14) .

2. Delivery device (1) for delivering a flowable medium, in particular according to Claim 1, having a delivery drive (2), a pump device (3), and a scoop device (4), wherein the delivery drive (2) is arranged on a first end (6) of a pipe (5), **characterized in that** the pump device (3) and the scoop device (4) are arranged within the pipe (5); **in that** the scoop device (4) has a foot valve (8) which is arranged on a second end (7) of the pipe (5), by means of which foot valve (8) an inlet (9) for an inflow of medium into a piston chamber (10) is controllable; **in that** a piston (11) which sub-divides the piston chamber (10) into an inflow region (12) and an outflow region (13) is arranged in the piston chamber (10) of the scoop device (4), wherein the inflow region (12) and the outflow region (13) are able to be connected or are connected by way of the piston (11); **in that** the piston (11) by way of a piston rod (14) is movable between a retracted position and an extended position within the piston chamber (10) by means of the delivery drive (2); **in that** the pump device (3) has a pump chamber (19) in which is disposed a pump piston (20) that is movable between an extended position and a retracted position within the pump chamber (19) by means of the delivery drive (2); and **in that** the pump chamber (19) has an inlet valve (21) and an outlet valve (22).

3. Delivery device (1) according to Claim 1 or 2, **characterized in that** the scoop device (4) in the inflow direction of the medium is arranged upstream of the pump device (3).

4. Delivery device (1) according to one of the preceding claims, **characterized in that** the piston (11) has a piston valve (15) by way of which the inflow region (12) and the outflow region (13) of the piston chamber (10) are able to be connected or are connected, in particular wherein the piston valve (15) is designed as a check valve, preferably as a ball check valve, as a result of which a flow direction from the inflow region (12) into the outflow region (13) of the piston chamber (10) is established; and/or **in that** the foot valve (8) is designed as a check valve, as a result of which a flow direction into the inflow region (12) of the piston chamber (10) is established.

5. Delivery device (1) according to one of the preceding claims, **characterized in that** the delivery device (1) is specified in such a manner that the foot valve (8) is open or opens during a movement of the piston (11) from the extended position to the retracted position, and new medium is inducted into the inflow region (12) through the foot valve (8), and medium from the outflow region (13) is pushed into the pump device (3); and/or **in that** the foot valve (8) is closed or closes during a movement of the piston (11) from the retracted position to the extended position, and medium from the inflow region (12) is pushed into the outflow region (13).

6. Delivery device (1) according to one of the preceding claims, **characterized in that** the delivery drive (2) is designed as an oscillating drive, in particular as a pneumatic motor; and/or **in that** a delivery output of the scoop device (4) is greater than a delivery output of the pump device (3).

7. Delivery device (1) according to one of the preceding claims, **characterized in that** the delivery device (1) is specified so that medium, in particular during a movement of the piston (11) from the extended position to the retracted position, can flow back from the outflow region (13) into the inflow region (12), in particular **in that** medium can flow back between the piston (11) and an internal wall (16) of the piston chamber (10) and/or by way of at least one relief opening (17) on the piston (11), preferably by way of at least one relief opening (17) on the piston valve (15).

8. Delivery device (1) according to one of the preceding claims, **characterized in that** the inlet (9) is designed as an axial and/or a radial opening of the pipe (5), in particular as an axial and/or a radial bore of the pipe (5); and/or **in that** at least one spacer (18) is designed on the second end (7) of the pipe (5).

9. Delivery device (1) according to one of the preceding claims, **characterized in that** feedback-controlling of the foot valve (8) is at least partially performed by forced control of the foot valve (8) by the piston (11), in particular wherein the foot valve (8) has a valve body with a face that is arranged obliquely relative to the longitudinal axis of the pipe (5), which face is able to be impinged by the piston (11) or a displacement member of the piston (11) in such a manner that the valve body is able to be displaced counter to a restoring force, which is in particular able to be generated by a restoring means, when the piston (11) is moved from the retracted position to the extended position.

10. Delivery device (1) according to one of the preceding claims, **characterized in that** the piston (11) is or is not forcibly controlled by the piston rod (14); and/or **in that** the piston (11) is movable from the extended position to the retracted position or vice versa by means of a restoring element, in particular by means of a tension and/or compression spring.

11. Delivery device (1) according to one of the preceding claims, **characterized in that** a medium contained in the pump chamber (19), during a movement of the pump piston (20) from a, or the, retracted position to a, or the, extended position is able to be displaced by the pump piston (20) by way of a delivery duct (23), in particular a delivery duct (23) within the pump piston (20), through the outlet valve (22) into a delivery line (24) .

12. Delivery device (1) according to one of the preceding claims, **characterized in that** a, or the, pump piston (20) is configured as part of the piston rod (14) or is fixedly connected thereto, preferably wherein a diameter of a cross section of the piston rod (14) in a pump piston portion is wider than in a connecting portion between the pump piston (20) and the piston (11).

13. Delivery device (1) according to one of the preceding claims, **characterized in that** the delivery device (1) is designed as a drum pump, in particular wherein the delivery drive (2) of the delivery device (1) is able to be arranged outside a drum and/or the pipe (5) is able to be arranged within a drum.

14. Use of the delivery device (1) according to one of Claims 1 to 3 for delivering a viscous medium, in particular grease, in particular from a drum.

## Revendications

1. Dispositif de transfert (1) pour le transfert d'un produit fluide, comprenant un moteur de transfert (2), un dispositif de pompage (3) et un dispositif de puisage (4), dans lequel le moteur de transfert (2) est disposé à une première extrémité (6) d'un tube (5), **caractérisé en ce que** le dispositif de pompage (3) et le dispositif de puisage (4) sont disposés à l'intérieur du tube (5), que le dispositif de puisage (4) comporte un clapet de pied (8) qui est disposé à une deuxième extrémité (7) du tube (5), au moyen duquel clapet de pied (8) une admission (9) pour un flux de produit dans une chambre à piston (10) peut être réglée, que dans la chambre à piston (10) du dispositif de puisage (4) est disposé un piston (11) qui divise la chambre à piston (10) en une zone d'admission (12) et une zone d'évacuation (13), la zone d'admission (12) et la zone d'évacuation (13) étant reliées ou pouvant être reliées par le piston (11), que le piston (11) peut être déplacé par une tige de piston (14), au moyen du moteur de transfert (2), entre une position d'entrée et une position de sortie à l'intérieur de la chambre à piston (10), que le dispositif de pompage (3) comporte un piston de pompage (20), et que le piston (11) du dispositif de puisage (4) et le piston de pompage (20) du dispositif de pompage (3) peuvent être déplacés par le moteur de transfert (2) par le biais de la tige de piston (14).

2. Dispositif de transfert (1) pour le transfert d'un produit fluide, en particulier selon la revendication 1, comprenant un moteur de transfert (2), un dispositif de pompage (3) et un dispositif de puisage (4), dans lequel le moteur de transfert (2) est disposé à une première extrémité (6) d'un tube (5), **caractérisé en ce que** le dispositif de pompage (3) et le dispositif de puisage (4) sont disposés à l'intérieur du tube (5), que le dispositif de puisage (4) comporte un clapet de pied (8) qui est disposé à une deuxième extrémité (7) du tube (5), au moyen duquel clapet de pied (8) une admission (9) pour un flux de produit dans une chambre à piston (10) peut être réglée, que dans la chambre à piston (10) du dispositif de puisage (4) est disposé un piston (11) qui divise la chambre à piston (10) en une zone d'admission (12) et une zone d'évacuation (13), la zone d'admission (12) et la zone d'évacuation (13) étant reliées ou pouvant être reliées par le piston (11), que le piston (11) peut être déplacé par une tige de piston (14), au moyen du moteur de transfert (2), entre une position d'entrée et une position de sortie à l'intérieur de la chambre à piston (10), que le dispositif de pompage (3) comporte une chambre de pompage (19) dans laquelle est disposé un piston de pompage (20) qui peut se déplacer au moyen du moteur de transfert (2) entre une position de sortie et une position d'entrée à l'intérieur de la chambre de pompage (19), et que la chambre de pompage (19) comporte un clapet d'admission (21) et un clapet d'évacuation (22).

3. Dispositif de transfert (1) selon la revendication 1 ou 2, **caractérisé en ce que** le dispositif de puisage (4) du dispositif de pompage (3) est placé en amont dans la direction d'afflux du produit.

4. Dispositif de transfert (1) selon une des revendications précédentes, **caractérisé en ce que** le piston (11) comporte un clapet de piston (15) pour le biais duquel la zone d'admission (12) et la zone d'évacuation (13) de la chambre à piston (10) peuvent être reliées ou sont reliées, en particulier le clapet de piston (15) étant configuré comme un clapet anti-retour, de préférence comme un clapet anti-retour à bille, de sorte qu'une direction de débit est définie de la zone d'admission (12) à la zone d'évacuation (13) de la chambre à piston (10), et/ou que le clapet de pied (8) est configuré comme un clapet anti-retour, de sorte qu'une direction de débit est définie vers la zone d'admission (12) de la chambre à piston.

5. Dispositif de transfert (1) selon une des revendications précédentes, **caractérisé en ce que** ce dispositif de transfert (1) est agencé de telle sorte que, lorsque le piston passe de la position de sortie à la position d'entrée, le clapet de pied (8) est ouvert ou s'ouvre, du produit neuf est aspiré par le clapet à pied (8) dans la zone d'admission (12) et du produit est poussé de la zone d'évacuation (13) vers le dispositif de pompage (3) et/ou que, lorsque le piston (11) passe de la position d'entrée à la position de sortie, le clapet de pied (8) est fermé ou se ferme et du produit est poussé de la zone d'admission vers la zone d'évacuation.

6. Dispositif de transfert (1) selon une des revendications précédentes, **caractérisé en ce que** le moteur de transfert (2) est configuré comme un moteur oscillant, en particulier comme un moteur pneumatique et/ou qu'une capacité de débit du dispositif de puisage (4) est supérieure à une capacité de débit du dispositif de pompage (3).

7. Dispositif de transfert (1) selon une des revendications précédentes, **caractérisé en ce que** ce dispositif de transfert (1) est agencé de telle sorte que, en particulier lorsque le piston (11) passe de la position de sortie à la position d'entrée, du produit peut refluer de la zone d'évacuation (13) vers la zone d'admission (12), en particulier du produit pouvant refluer entre le piston (11) et une paroi intérieure (16) de la chambre à piston (10) et/ou par au moins un orifice de décharge (17) sur le piston (11), de préférence par au moins un orifice de décharge (17) sur le clapet de piston (15).

8. Dispositif de transfert (1) selon une des revendications précédentes, **caractérisé en ce que** l'admission (9) est configurée comme un orifice axial et/ou radial du tube (5), en particulier comme un perçage axial et/ou radial du tube (5) et/ou qu'au moins un écarteur (18) est configuré sur la deuxième extrémité (7) du tube (5).

9. Dispositif de transfert (1) selon une des revendications précédentes, **caractérisé en ce qu'**un réglage du clapet de pied (8) se fait au moins partiellement par une commande forcée du clapet de pied (8) par le piston (11), en particulier le clapet de pied (8) présentant un corps de clapet doté d'une surface inclinée par rapport à l'axe longitudinal du tube (5), laquelle peut être frappée par le piston (11) ou un corps de déplacement du piston (11) de telle sorte que le corps de clapet peut être déplacé à l'encontre d'une force de rappel qui peut être générée en particulier par un moyen de rappel, quand le piston (11) est déplacé de la position d'entrée vers la position de sortie.

10. Dispositif de transfert (1) selon une des revendications précédentes, **caractérisé en ce que** le piston (11) est commandé de force ou non par la tige de piston (14) et/ou que le piston (11) peut être déplacé de la position de sortie vers la position d'entrée ou inversement au moyen d'un élément de rappel, en particulier au moyen d'un ressort de traction et/ou de compression.

11. Dispositif de transfert (1) selon une des revendications précédentes, **caractérisé en ce qu'**un produit contenu dans la chambre de pompage (19) peut être refoulé par le piston de pompage (20), lorsque le piston de pompage (20) passe d'une ou de la position d'entrée à une ou à la position de sortie, via un canal de transfert (23), en particulier un canal de transfert (23) à l'intérieur du piston de pompage (20), à travers un clapet d'évacuation (22) dans une conduite de transfert (24).

12. Dispositif de transfert (1) selon une des revendications précédentes, **caractérisé en ce qu'**un ou le piston de pompage (20) est configuré comme une partie de la tige de piston (14) ou fixé à celle-ci, un diamètre d'une section transversale de la tige de piston (14) étant de préférence plus large dans un segment du piston de pompage que dans un segment de liaison entre le piston de pompage (20) et le piston (11).

13. Dispositif de transfert (1) selon une des revendications précédentes, **caractérisé en ce que** ce dispositif de transfert (1) est configuré comme une pompe pour fûts, en particulier le moteur de transfert (2) du dispositif de transfert (1) pouvant être disposé à l'extérieur et/ou le tube (5) à l'intérieur d'un fût.

14. Utilisation d'un dispositif de transfert (1) selon une des revendications 1 à 13 pour transférer un produit visqueux, en particulier de la graisse, en particulier hors d'un fût.
